# EUROPÄISCHE PATENTSCHRIFT

(11) **EP 1 060 209 B1**
(45) Veröffentlichungstag und Bekanntmachung des Hinweises auf die Patenterteilung: **02.06.2004**
(21) Anmeldenummer: 98964468.7
(22) Anmeldetag: 02.12.1998
(51) Int. Cl.: C08K 3/32, B29C 43/30, B32B 31/30, B29C 45/14, B29C 45/16

(54) **VERFAHREN ZUR HERSTELLUNG VON OBERFLÄCHENHARTEN, IM "FILM-INSERT-MOULDING"-VERFAHREN HANDHABBAREN, BEIDSEITIG HOCHGLÄNZENDEN, GELKÖRPERFREIEN PMMA-FOLIEN**
METHOD FOR PRODUCING SURFACE-HARDENED PMMA FILMS WHICH ARE HIGHLY GLOSSY ON BOTH SIDES, FREE OF GEL BODIES AND CAN BE MANIPULATED IN THE "FILM-INSERT-MOULDING" METHOD
PROCEDE POUR PRODUIRE DES FILMS DE PMMA DURCIS EN SURFACE, EXTREMEMENT BRILLANTS SUR LES DEUX FACES, EXEMPTS DE CORPS GELIFIANTS, ET MANIPULABLES SELON LE PROCEDE DE "SURMOULAGE DU FILM"

(30) Priorität: 05.12.1997 DE 19753972; 25.03.1998 DE 19813001
(43) Veröffentlichungstag der Anmeldung: 20.12.2000
(73) Patentinhaber: Röhm GmbH & Co. KG, 64293 Darmstadt (DE)
(72) Erfinder: NUMRICH, Uwe, D-64331 Weiterstadt (DE); HOFMANN, Klaus, D-64347 Griesheim (DE); KAUBE, Peter, D-64380 Rossdorf (DE); SCHMIDT, Horst, D-64342 Seeheim-Jugenheim (DE); VETTER, Heinz, D-64380 Rossdorf (DE)
(86) Internationale Anmeldenummer: PCT/EP1998/007749
(87) Internationale Veröffentlichungsnummer: WO 1999/029766

(56) Entgegenhaltungen:
- EP-A- 0 298 208
- EP-A- 0 454 520
- EP-A- 0 847 852
- DE-A- 19 544 563
- GB-A- 2 080 199

## Beschreibung

Will man spritzgegossene Formteile mit bedruckten Polymethylmethacrylat-Folien (PMMA) dekorieren, werden zwecks Erreichen einer gewissen "Tiefenwirkung" des Druckes PMMA-Folien im Dickenbereich zwischen 80 und 300 µm eingesetzt. Zur Dekoration werden entweder mit thermoplastischen Trägermaterialien kolaminierte, bedruckte PMMA-Folien, vorgeformt und gestanzt auf die gewünschte.Geometrie, in das Spritzgießwerkzeug eingelegt und hinterspritzt oder bedruckte PMMA-Folie als Rollenware in ein Spritzgießwerkzeug geführt und hinterspritzt. Das Hinterspritzen geschieht auf die Druckseite, so daß-der Druck von der UV-Absorberhaltigen PMMA-Folie geschützt ist. Zum Hinterspritzen können beispielsweise folgende Thermoplaste und Polymerblends eingesetzt werden: ABS, PC/ABS-Blends, PVC, PC, PC/ASA-Blends, PP, PP-Blends.

Zur Dekoration werden entweder bedruckte Folienformteile (optional vorgeformt) in das Spritzgießwerkzeug eingelegt und hinterspritzt oder bedruckte PMMA-Folie als Rollware in das Spritzgießwerkzeug eingeführt und hinterspritzt oder PMMA-Folie wird auf ein, thermoplastisches Trägermaterial laminiert und (optional vorgeformt) in das Spritzgießwerkzeug eingelegt und hinterspritzt. Als Trägermaterialien, die mit der erfindungsgemäßen und bedruckten Folie laminiert werden, können beispielsweise folgende Thermoplasten Verwendung finden: ABS, Polycarbonat-ABS-Blends, ASA (Acrylesterstyrolacrylnitril-Copolymere), Polycarbonat-ASA-Blends, Polyolefine wie z.B. Polyethylen, Polypropylen, PVC und Polyphenylen-enthaltende Blends. Alle thermoplastischen Werkstoffe können durch Glasfaser oder mineralische Füllstoffe verstärkt sein.

Die PMMA-Folie übernimmt die Funktion eines Schutzlackes. Im Unterschied zu mit Schutzlack geschützten oder direkt bedruckten oder mit Transferverfahren bedruckten (thermischen Transfer, wässriger Transfer). Spritzgußteilen bietet die Oberflächendekoration mit bedruckten PMMA-Folien folgende Vorteile:
· deutliche Kostenreduzierung (Oberflächenfinish und Dekoration erfolgen in einem Prozeßschritt)
· lösungsmittelfreier Prozeß
· keine teuren Investitionen und Umweltauflagen
· einfacher Wechsel des Druckdesign
· höhere Designfreiheit

Die Dekoration von thermoplastischen Formteilen mit bedruckten Folien, einhergehend mit dem Spritzgießprozeß, wird im allgemeinen "In-Mould-Film-Decoration" genannt. Die bekannteste Form dieses Verfahrens stellt das sogenannte "Insert-Moulding" dar. Hierzu wird die dekorativ-bedruckte PMMA-Folie zur Versteifung mit einem thermoplastischen Trägermaterial kolaminiert. Hierzu kommen vorzugsweise ABS, ASA, PC, PVC, PP, PPE sowie Blends dieser Werkstoffe zum Einsatz.

Das Folienlaminat wird mittels eines Thermoformprozesses auf die gewünschte Geometrie geformt und gestanzt. Die Vorformlinge werden anschließend dem Hnterspritzprozeß zur eigentlichen Formteilherstellung zugeführt. Hierzu werden die Vorformlinge, meist automatisch, in das Spritzgießwerkzeug eingelegt und mit thermoplastischen Kunststoffen hinterspritzt. Vorzugsweise kommen zum Hinterspritzen ABS, ASA, PC, PVC, PP, PPE sowie Blends dieser Werkstoffe zum Einsatz. Wird das Trägermaterial in ausreichender Dicke eingesetzt, kann das Hinterspritzen eingespart werden und das ungeformte, gestanzte oder geschnittene Laminat direkt als Formteil eingesetzt werden.

"In-Mould-Film-Decoration" bietet, aufgrund der sehr rationellen Prozeßführung und der Möglichkeit des schnellen Designwechsels den Verarbeitem bzw. Formteilherstellem Substitutionsmöglichkeiten althergebrachter, aufwendiger Verfahren.

Beispielsweise kann mit transparenten, elastischen Lacken bedruckte PMMA-Folie, mit transparenten Thermoplasten hinterspritzt, auf sehr rationelle Art und Weise zur Herstellung von Automobil-Heckleuchtenabdeckungen eingesetzt werden. Als transparente Thermoplaste kommen vorzugsweise PMMA-Formmassen, SAN, Polystyrol-Formmassen, Polycarbonat sowie PMMA/SAN-Blends zum Einsatz.

Dieses Verfahren bietet die Möglichkeit eines schnellen Designwechsels, ohne daß neue, kostenaufwendige Mehrkomponentenspritzgießwerkzeuge gebaut werden müssen. Außerdem wird das aufwendige Einfärben der zum Mehrkomponentenspritzguß aufwendige PMMA-Formmassen eingespart.

"In-Mould-Film-Decoration" läßt in diesem Anwendungssegment die Herstellung kompletter Automobil-Karosserieaußenteile zu, die optional die Heckleuchtenabdeckung als Funktionsfläche enthalten können.

Optional kann die mit transparenten, elastischen Lacken bedruckte PMMA-Folie bei dieser Anwendung mit transparenten, thermoplastischen Trägermaterialien zur Erhöhung der Steifigkeit zum Schutz der Lacke vor der heißen, unter hohem Druck stehenden Schmelze des zum Hinterspritzen verwendeten thermoplastischen Werkstoffs, vor dem Formteilherstellprozeß hinterspritzt werden.

Eine besondere, sehr wirtschaftlich arbeitende Ausführungsform von "In-Mould-Film-Decoration" verwendet kombinierte Umform-Hinterspritzwerkzeuge, mit denen in einem Prozeß auf Basis bedruckter Folien als Rollenware sowohl das Verformen der Folien als auch das Hinterspritzen gestaltet wird. Dieses Verfahren wird allgemein "Film-Insert-Moulding" genannt.

Bei Verwendung von PMMA-Folien zur Dekoration von spritzgegossenen Formteilen mittels "In-Mould-Film-Decoration" werden hohe Ansprüche an den PMMA-Folienwerkstoff gestellt:
· gute Handhabbarkeit im Druckprozeß, d.h. ausreichende Dehnbarkeit
· hohe Oberflächenhärte (mindestens Pencil-Hardness HB) zum Vermeiden des Verkratzens mit PMMA-Folie dekorierter Formteile
· hoher Oberflächenglanz (Meßverfahren nach DIN 67530) ≥ 120
· geringe Eintrübung bei Feuchteeinwirkung < 2 % Haze entsprechend der auf Seite 17 beschriebenen Methode
· niedrige Oberflächentrübung < 1,5 %
· extrem niedrige Gelkörperanzahl max. 1 Gelkörper/200 cm²
· hohe Witterungsbeständigkeit; vergleichbar mit den von Standard-PMMA
· ausreichende Absorption von UV-Licht; UV-Absorption im Bereich zwischen 290 und 370 nm < 1 %.

### Stand der Technik

DE 38 42 796 (Röhm GmbH) beschreibt PMMA-Folien auf Basis von PMMA-Formmassen mit niedriger Elastomerteitchengröße und hohem Elastomeranteil. Die erfindungsgemäßen Folie sind bezüglich dem Parameter "Oberflächenhärte" mit diesen Formmassen nicht herstellbar.

WO 96/30435 und EP 763 560 (Mitsubishi Rayon) beschreiben die Herstellung von bis zu 0,3 mm dicken PMMA-Folien, basierend auf einer bestimmten PMMA-Zusammensetzung: ein Schlagzähmodifier auf der Basis von Polybutylacrylat mit bestimmten Partikeldurchmesser sowie PMMA-Matrixpolymer III und die (optionsweise) Zugabe eines Schmelzfestigkeitsmodifiers. (Polymer I).

Die Herstellung der Folie erfolgt mittels einem 1-Walzenprozeß (sog. Chill-Roll-Schmelzegießprozeß), bei dem die thermoplastische Schmelze während dem Abkühl- und Verfestigungsprozeß mit einer einzelnen Metallwalze in Kontakt gebracht und abgekühlt wird. Es wird ausdrücklich darauf hingewiesen, daß die thermoplastische Schmelze zur Herstellung von Folien des beanspruchten Dickenbereichs nicht zwischen zwei Metallwalzen geformt werden kann.

Dieses Verfahren weist gegenüber dem 2-Walzenprozeß bedeutende Nachteile auf, welche entscheidenden Einfluß auf die Folienqualität nehmen. Gelkörper, zu deren Ausbildung schlagzähmodifizierte PMMA-Formmassen grundsätzlich neigen, werden bei der Formgebung auf der einzelnen Chill-Roll-Walze, im Gegensatz zum 2-Walzen(Glätt)prozeß nicht unter die Folienoberfläche gedrückt und bleiben somit als optischer Defekt sichtbar. Besonders nachteilig wirkt sich dies im nachfolgenden Druckprozeß zur Herstellung von Dekorfolien aus, bei dem sich deutlich sichtbare Fehlstellen im Bereich der Gelkörper aufzeigen. Ferner weist die der Chill-Roll-Walze entgegengesetzte, frei an der Luft abkühlende Folienoberfläche eine merkliche Oberflächentrübung auf, die sich : aus der unterschiedlich starken Volumenkontraktion der Elastomerteilchen und der PMMA-Matrix ergibt. Hierdurch wird eine ausgeprägte "Berg und Tal"-Oberflächenstruktur erzeugt, die das Licht streut und somit einen nachteiligen Trübungseffekt hervorruft.

DE 195 44 563 (Röhm GmbH) beschreibt die zur Herstellung der erfindungsgemäßen Folien eingesetzten schlagzähen PMMA-Formmassen.

DE 40 18 530 (Röhm GmbH) beschreibt ein Verfahren zur Herstellung von Vollplatten oder Folien mit weniger als 1 mm Dicke aus einem thermoplastischen Kunststoff mit einer Glasübergangstemperatur > 50 °C. Die Glättung wird durch eine Führung der Folie auf einem Endlosband erreicht. Die erhaltenen Platten oder Folien sind praktisch frei von Orientierungen und Doppelbrechung. EP 659 829 (Röhm GmbH) beschreibt eine Witterungsschutzfolie und damit beschichtete Formkörper, die Folie hat neben dem Schutz vor der Witterung auch die Aufgabe, UV-Strahlen zu absorbieren. Sie besteht aus einer Hartphase aus PMMA und einer Zähphase, wobei sich der UV-Absorber in der Hartphase befindet.

EP 391 193 (Bayer AG) beschreibt ein Verfahren zur Herstellung beidseitig glänzender, optisch isotroper Extrusionsfolien mit einer Dicke kleiner als 0,6 mm, welche entweder
1. durch Extrusion und anschließender Kalandrierung zwischen einer lackierten elastischen Walze und einer hochglänzenden Stahlwalze hergestellt oder
2. in zwei Extrusionsschritten geformt werden, wobei im ersten Schritt eine auf der einen Seite hochglänzende und auf der anderen Seite matte Folie durch Extrusion und anschließende Kalandrierung zwischen einer geschliffenen elastischen Walze und einer hochglänzenden Stahlwalze hergestellt werden. in einem zweiten Extrusionsschritt wird die im ersten Schritt hergestellte Folie mit der Schmelze des gleichen thermoplastischen Kunststoffs auf der matten Seite der Folie beschichtet, diese erhaltene beschichtete Folie wird nochmals zwischen einer hochglänzenden Stahlwalze und einer geschliffenen elastischen Walze kalandriert, wobei die hochglänzende Seite der beschichteten Folie zur Walze aus geschliffenen elastischen Material zeigt.

Beide Verfahren, die sowohl technologisch aufwendig als auch mit sehr hohen Produktionskosten verbunden sind, tragen dem aktuellen Stand der Technik Rechnung, der die Herstellung von beidseitig glänzenden Folien zwischen zwei hochglänzenden Stahlwalzen wegen der extrem hohen und schwer zu kontrollierenden Walzenspaltkräften für unrealistisch hält.

Verfahren 1 weist den Nachteil auf, daß es großtechnisch nicht realisierbar ist, da die Lackschichten auf den Gummiwalzen unter dem Einfluß der hohen Schmelztemperatur sehr schnell verspröden. Um den Einfluß der hohen Schmelztemperaturen zu vermindern, können die lackierten Gummiwalzen in einem Wasserbad gekühlt werden, die Feuchte führt jedoch zu einer nachteiligen Beeinflussung der Oberflächenqualität der Folie.

Verfahren 2 weist eine äußerst ungünstige Wirtschaftlichkeit auf, da die Folienherstellung in zwei Extrusionsschritten durchgeführt werden muß. Ferner führt die Extrusionsbeschichtung einer Folie mit Schmelze und die nachfolgende Kalandrierung, insbesondere im erfindungsgemäß beanspruchten Dickenbereich, zu ungünstigen Oberflächeneigenschaften.

EP 195 075 (Exxon) beschreibt ein Verfahren zur Herstellung einer Folie aus 10 - 85 Gew.-% eines Elastomers und 90 -15 Gew.-% eines Polyolefins, in dem man die extrudierte Bahn bei einer Temperatur über ihren Erweichungspunkt durch den Spalt von gegenläufigen Walzen führt. Eine der Walzen ist eine Hochglanzkühlwalze und die andere Walze ist eine Walze mit einer Hochglanzgummioberfläche, dabei wird die Folie gekühlt.

Die so erhaltenen Folien sind zwischen 25 und 250 Micron (10⁻⁶ m) dick. Zuhaltekräfte werden nicht beschrieben, die in der Diskussion zu EP 391 193 geschilderten Nachteile bestehen auch hier.

EP 212 355 (Bayer AG) beschreibt eine Folie aus Polycarbonat, die gegebenenfalls mit einer klebefreien Polyurethanschicht bedruckt wird. Die Folien sind einseitig mattiert oder einseitig strukturiert, indem sie über eine mattierte oder strukturierte Abkühlwalze gezogen werden. Die so erhaltenen Folien werden bedruckt und hinterspritzt. Als Kunststoff zur Hinterspritzung wird ein Copolymerisat aus Acrylnitril, Butadien und Styrol verwendet.

EP 294 705 (Röhm GmbH) beschreibt ein Verfahren zur Herstellung beidseitig geglätteter Folien, das als ein Glättelement eine bereits geglättete Folie, die in den Verfahren vorher erzeugt und rückgeführt wird, verwendet.

A. Huemer (Kunststoffe. 87 (1997), 10, S. 1351 ff) diskutiert die Vorund Nachteile der Anordnung von Glättwerken, ebenso H. Groß in Kunststoffe 87 (1997), 5, S. 564.
Huemer stellt fest, daß "Versuche mit höherem Liniendruck scheitem, da sich dadurch weder die Verweilzeit im Walzenspalt noch die Relaxationszeit im Polymeren ändert".

Die von Huemer beschriebenen Maßnahmen (richtiges Verhältnis von Düsenaustrittsgeschwindigkeit und Abzugsgeschwindigkeit) reichen nicht aus, um Folien mit hoher Oberflächenqualität zu erhalten. Zur Glättung der Oberfläche ist nicht, wie Huemer ausführt, ein möglichst geringer Liniendruck im Walzenspalt erforderlich, sondern ein möglichst hoher.

### Aufgabe und Lösung

Es bestand somit die Notwendigkeit, ein wirtschaftlich arbeitendes, großtechnisch handhabbaren Herstellverfahren für Folien mit Dicken ≤ 0,3 mm aus schlagzähen PMMA-Formmassen zur Verfügung zu stellen, welches außerdem eine beidseitig hochglänzende, nahezu gelkörperfreie Oberflächenqualität mit für Dekoranwendungen ausreichender Oberflächenhärte gewährleistet.
Ferner muß die Folie im Druckprozeß sowie während dem "In-Mould-Film-Decoration"-Prozeß sicher und wirtschaftlich handhabbar sein, sie muß demgemäß eine ausreichende Dehnbarkeit aufweisen.

Somit war auf die sachgerechte Wahl der PMMA-Komponente sehr großen Wert zu legen, insbesondere:was die Balance zwischen Oberflächenhärte und Dehnbarkeit angeht.

Die im folgenden dargestellten, für Anwendungen zur Oberflächendekoration notwendigen PMMA-Folieneigenschaften lassen sich nur dann erreichen, wenn:
· witterungsbeständige Schlagzähmodifier Basis Polybutylacrylat eingesetzt werden
· der eingesetzte Schlagzähmodifier eine gewisse Mindestteilchengröße der wirksamen Etastomerphase aufweist (Teilchengrößenbereich)
· der eingesetzte Schlagzähmodifier aufgrund günstigem morphologischem Aufbau (saubere Trennung von Zäh- und Elastomerphase, möglichst hoher wirksamer Elastomeranteil, möglichst hohe Teilchengröße) in relativ starker Verdünnung eingesetzt werden kann und somit die mindestens notwendige Oberflächenhärte sichergestellt ist.
· zur Herstellung des Folienrohstoffs ein spezielles Formmassenher-stellverfahren verwendet wird, welches, aufgrund der integrierten Schlagzähmodifierkoaguliertechnik eine ausreichende Abtrennung von wasserlöslichen Polymerisationshilfsstoffen der Schlagzäh-modifierherstellung ermöglicht, und somit eine nur geringe Trübungsneigung der Folie bei Wasserdampfeinwirkung sichergestellt ist.
· gute Handhabbarkeit im Druckprozeß (für "Film-Insert-Moulding" werden meist dekorativ bedruckte PMMA-Folien -eingesetzt), d.h. ausreichende Dehnbarkeit
· hohe Oberflächenhärte (mindestens Pencil-Hardness HB) zum Vermeiden des Verkratzens mit PMMA-Folie dekorierter Formteile
· hoher Oberflächenglanz (Meßverfahren nach DIN 67530, ≥ 120)
· geringe Eintrübung bei Feuchteeinwirkung < 2 % Haze entsprechend der auf Seite 17 beschriebenen Methode
· niedrige Oberflächentrübung < 1,5 %
· extrem niedrige Gelkörperanzahl max. 1 Gelkörper/200 cm²
· hohe Witterungsbeständigkeit, vergleichbar mit der von Standard-PMMA
· ausreichende Absorption von UV Licht; UV-Absorption im Bereich zwischen 200 und 370 nm < 1 %

Die Herstellung der eingesetzten schlagzähen PMMA-Formmassen ist in der DE 195 44 563 (Röhm GmbH) beschrieben.

Ferner ist zur-Sicherstellung einer hohen Folienqualität (extrem niedrige Gelkörperanzahl, hoher Oberflächenglanz, hohe Witterungsbeständigkeit, niedrige Oberflächentrübung) das erfindungsgemäße Folienformgebungsverfahren notwendig. Die vorab erwähnte Eigenschaftskombination ist mit dem zur Herstellung von Folien in dem beanspruchten Dickenbereich herkömmlicherweise eingesetzten Cill-Roll-Verfahren nicht möglich.

Die Herstellung der erfindungsgemäßen Folie erfolgt mit einem speziellen, auf der Glättwerktechnik basierenden Formgebungsverfahren unter Einsatz eines speziellen Zuhaltesystems und eines speziell bombierten, spiegelhochglanzpolierten Stahlwalzenpaares, in dessen Walzenspalt die Formgebung der erfindungsgemäßen Folien durchgeführt wird. In der Glättwerktechnik wurden bislang nur deutlich dickere Folien hergestellt (d > 0,3 mm; siehe "Folien für thermogeformte Verpackungen", VDI-Verlag, 1992).

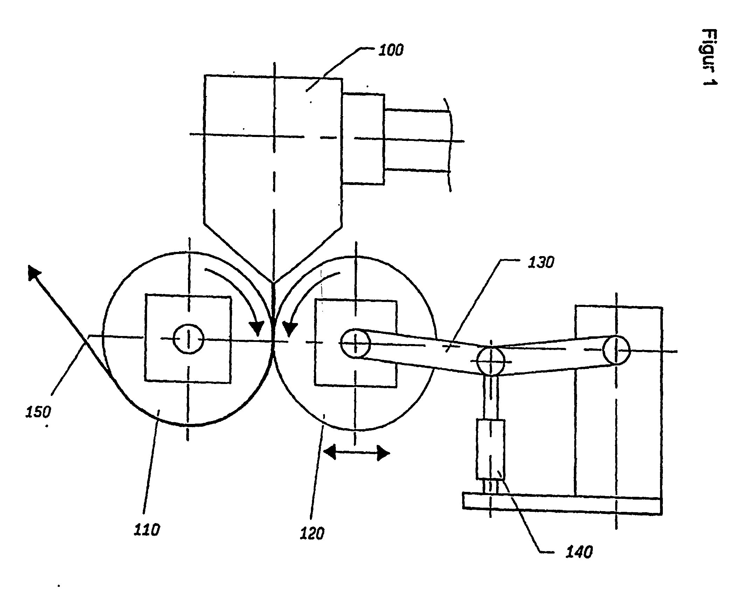

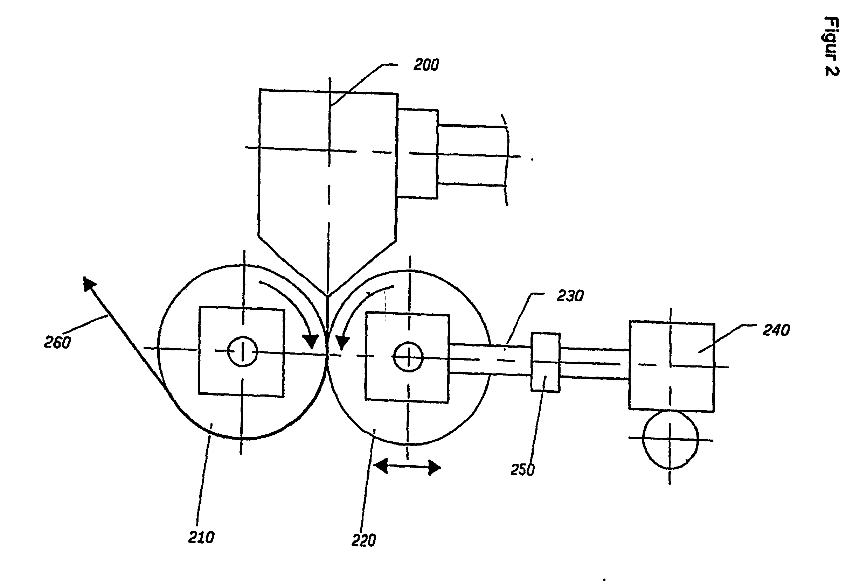

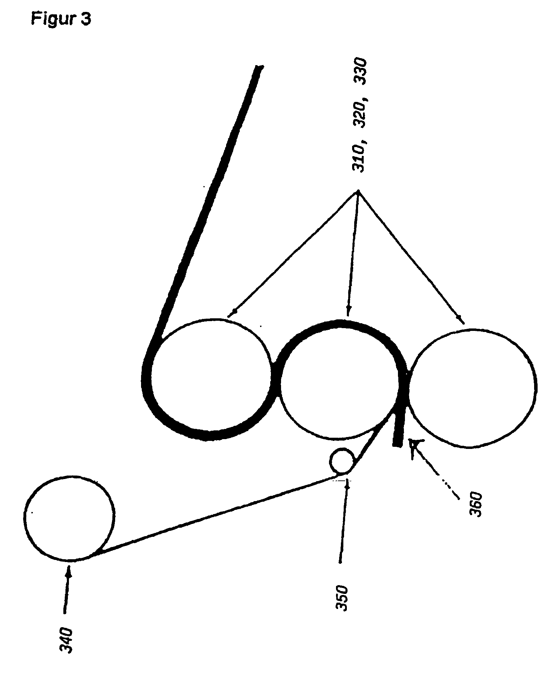

Zur Herstellung der erfindungsgemäßen Folien (Dickenbereich 80 bis 300 µm, bevorzugt 95 bis 250 µm. besonders bevorzugt 105 bis 250 µm) sind extrem hohe Zuhaltekräfte im Walzenspalt notwendig, die mit den bislang eingesetzten Konstruktionen. (Kniehebelzuhaltung, siehe Figur 1, oder herkömmliche hydraulische Zuhaltung) nicht realisiert werden können. Eine hydraulische Zuhaltung, die diese hohen Zuhaltekräfte auch nur annährend aufbringen soll, ist wesentlich konstruktiv aufwendiger als die erfindungsgemäße Lösung. Überraschenderweise gelang die Erzeugung der hohen Zuhaltekräfte mittels der erfindungsgemäßen Konstruktion: Von den glättspaltbildenden Walzen ist eine im Glättwerkgestell unverrückbar fixiert. Die zweite, verfahrbare Walze wird durch zwei parallel angeordnete Antriebe (elektrisch oder hydraulisch) mit Schneckengetriebe, verbunden mit Schubstangen an den Lagerstellen der Walzen positioniert (siehe Figur 2).

Auf diese Weise wird für den gewünschten Spalt zwischen den Walzen das Öffnen des Walzenspaltes durch den von der Schmelze verursachten Druck verhindert. Der somit maximal erreichbare Zuhaltedruck beträgt 1500 N/cm.

Die mittels eines Ein- oder Doppelschneckenextruders erzeugte Schmelze (zur Sicherstellung der Konstanz der Schmelzestroms können optional Schmelzepumpen eingesetzt werden) wird über eine für Folienextrusion ausgelegte Düse dem erfindungsgemäßen Formgebungsverfahren zugeführt. Die Schmelze wird im definierten Walzenspalt dimensioniert und durch die Oberfläche der temperierten, spiegelhochglanzpolierten Walzen (Rauhtiefe RA 0,002 - 0,006, RT = 0,02 - 0,04 gemessen nach DIN 4768) geglättet und abgekühlt. Dabei ist die geometrische Form einer oder beider Walzen, abweichend von der Zylinderform, bombiert geschliffen. Die Bombage beträgt 0.1 bis 0,2 mm, bezogen auf den Durchmesser der Walze. Die Bombage ist von entscheidender Bedeutung für eine über die Breite der Folie gleichmäßige Dickenverteilung.

### Definition "Bombage":

Parabolische Durchmesserzunahme von den Walzenrändem zur Mitte.
Literaturstelle: Hensen, Knappe, Patente, Kunststoff-Extrusionstechnik 11, Extrusionsanlagen, Hanser-Verlag, 1986. Die Bombage ist auf die zu erzielende Foliendicke und -breite anzupassen (d.h. es gibt keine universell einsetzbare Bombage).

Alternativ können zur Sicherstellung einer gleichmäßigen Dickenverteilung folgende konstruktive Maßnahmen vorgenommen werden:
· Walzen-Achs-Kreuzung ("Ax-Crossing")
· Walzen-Gegenbiegung ("Roll-Bending")
Diese beiden Methoden sind bei Glättwerken unüblich, da sie hier einen hohen konstruktiven Aufwand bedeuten. Sie werden üblicherweise an Kalanderanlagen eingesetzt.

Als Ergebnis des erfindungsgemäßen Verfahrens erhält man eine beidseitig hochglänzende, nahezu gelkörperfreie Folie mit hervorragenden Oberflächeneigenschaften.

Das erfindungsgemäße Verfahren läßt sich auch zur Herstellung von Polycarbonat-Folien mit hervorragender Oberflächeneigenschaften einsetzen.

Beim 2-Walzenprozeß wird die elastomermodifizierte PMMA-Schmelze zwischen zwei temperierten Stahlwalzen geformt, die Oberflächentemperatur der Stahlwalzen liegt unterhalb der Glastemperatur des eingesetzten PMMA-Matrixpolymeren. Hierdurch ergibt sich eine Vorzugsausrichtung der (gegenüber der Elastomerphase eine deutlich höhere Erstarrungstriebkraft besitzenden) PMMA-Matrixmoleküle an der Metall- bzw. Folienoberfläche, wodurch eine hochglänzende Folienoberfläche mit vemachlässigbar geringer Oberflächentrübung erreicht wird.

Der 2-Walzenprozeß gewährleistet femer ein merklich besseres Bewitterungsverhalten, da eine glatte Folienoberfläche sich weniger sensibel gegenüber einer UV-Licht-gestützten Erosion verhält.

Gewiß läßt sich durch Wahl von Modifierkomponenten, extrem niedriger Teilchengröße (wie in DE 38 42 796 veschrieben) auch mittels Chill-Roll-Prozeß eine beidseitig hochglänzende Folienoberfläche realisieren. Diese weist jedoch die für über Chill-Roll-Prozeß gefertigte PMMA-Folien typische, für Oberflächendekoration nachteilige, Gelkörperbildung auf.

Femer ist mit abnehmender Elastomerteilchengröße zwecks Gewährleistung einer ausreichenden Foliendehnbarkeit eine zunehmende Elastomerkonzentration notwendig, welche sich wiederum nachteilig auf die für Dekorationsanwendungen essentielle Oberflächenhärte auswirkt (Mindestanforderung ist Pencil-Hardness "HB", bevorzugt mindestens H, besonders bevorzugt mindestens 2H).

Der optimale Formgebungstemperaturbereich thermoplastischer, nicht kristalliner Kunststoffe liegt unterschiedlich zwischen der Einfriertemperatur (ET) und dem Bereich plastisch-viskosen Fließens. Zum Erreichen eines hohen Oberflächenglanzes sind beim Glättprozeß die Oberflächentemperaturen der Glätt-Formgebungswalzen niedriger als die Glastemperatur einzustellen. Daraus folgend sind Folien aus thermoplastischen Werkstoffen umso schwieriger zu dünnen Schichten zu formen, je größer die Temperaturdifferenz zwischen Walzentemperatur (muß geringer als T_{G} sein) und dem optimalen Warmformtemperaturbereich ist.

Wie aus dem Bild 99 auf Seite 166 von H. Saechtling, Kunststoff-Taschenbuch, 21. Auflage (1979) ersichtlich ist, ist aufgrund des vorab geschilderten Sachverhalts das Warmformen von dünnen Folien mit hochglänzenden Oberflächen bei Polycarbonat deutlich schwieriger als bei Polymethylmethacrylat. Daraus folgend sind mit dem verwendeten Glättprozeß bei Polycarbonatextrusion als niedrigste Dicke ca. 120 µm, bei PMMA etwa 100 µm erreichbar. Mit abnehmender Dicke steigen die notwendigen Zuhaltekräfte exponentiell an.

Ferner ist das Folienformgeben mit dem beanspruchten Glättprozeß bei thermoplastischen Werkstoffen umso einfacher zu gestalten, je breiter der Temperaturbereich für optimales Warmformen sich darstellt. Da sich in dem zu formenden Schmelzefilm beim Durchlaufen des Glättspaltes ein hoher Temperatur-Gradient einstellt, muß der zu formende Thermoplast einen angemessenen breiten Warmformtemperaturbereich haben. Daraus folgend, bestehen kaum Chancen, Thermoplaste wie PP oder PE zu den beanspruchten Folien zu verarbeiten.

### Prüfmethoden

E-Modul, Zugfestigkeit und Reißdehnung wurden geprüft nach ISO 527-3, die Einspannlänge betrug 60 mm, die Prüfgeschwindigkeit 50 mm/min.

Die Pencil-Hardness wurde entsprechend der ASTM D 3363-92 a geprüft.

Der Glanzgrad wurde bei 60° entsprechend der DIN 67530 gemessen.

Der "Haze" wurde entsprechend der ASTM D 1003 gemessen. Bezüglich der Berechnung der "Surface-Haze" wurde die Trübung der Folie nach beidseitiger Siliconölbehandlung von der im unbehandelten Zustand gemessenen Trübung abgezogen.

Die Bestimmung der Gelkörperanzahl stellt eine Röhm-inteme Methode dar (Qualitätssicherung-Arbeitsanweisung 1/021/220).

Gelkörper sind mittels Vergrößerung erkennbare, bei Auf- und Abbewegung des Probekörpers dunkel/hell aufblinkende Partikel. Sie werden hauptsächlich durch während dem Aufschmelzprozeß nicht aufschließbare hochmolekulare Anteile oder, wie z.B. bei schlagzähmodifiziertem PMMA, durch Aggregierung von Elastomerpartikeln der Schlagzähmodifierkomponente verursacht.

Das Auszählen der Gelkörper auf einer Folienfläche von 200 cm² erfolgt mittels eines Partikel-Zählgerätes "Copea CP-3" von "Agfa Gaevert".

### Trübung nach Feuchteeinwirkung:

Die Folien werden 96 h über 60 °C heißem Wasser (90 % Luftfeuchtigkeit) plaziert. Anschließend wird der Haze entsprechend der ASTM D 1003 gemessen.

### BEISPIELE

Die Herstellung der eingesetzten schlagzähen Formmassen und deren Zusammensetzung ist in der DE 195 44 563 (Röhm GmbH) beschrieben.

### Eingesetzte Rohstoffe:

Latex Dispersion als Schlagzähmodifierkomponente: 3-stufig aufgebautes Emulsionspolymerisat mit folgender Zusammensetzung:
1. Stufe: Copolymerisat aus Methylmethacrylat/Ethylacrylat/Allylmethacrylat = 95,7/4,0/0,3 (Gewichts-Teile)
2. Stufe: Copolymerisat aus Butylacrylat/Styrol/Allylmethacrylat = 82/17/1 (Gewichts-Teile)
3. Stufe: Copolymerisat aus Methylmethacrylat/Ethylacrylat = 96/4 Das Massenverhältnis der 3. Stufen ist 23/40/30 (Gewichts-Teile). Die Latexdispersion hat einen Feststoffgehalt von 45 % (Gew.-%).

Matrixpolymer 1: hergestellt durch kontinuierliche Substanzpolymerisation, mittels Molekulargewicht (Gewichtsmittel) = 110.000 Dalton. Copolymeres aus 96 Gew.-% Methylmethacrylat und 4 Gew.-% Methylacrylat.

Matrixpolymer 2: hergestellt durch diskontinuierliche Polymerisation, Copolymeres aus 80 Gew.-% Methylmethacrylat und 20 Gew.-% Butylacrylat. Molekulargewicht (Gewichtsmittel): 270.00 Dalton.

Matrixpolymer 3: hergestellt durch kontinuierliche Substanzpolymerisation. Mittleres Molekulargewicht (Gewichtsmittel) = 110.000 Dalton. Copolymeres aus 99 Gew.-% Methylmethacrylat und 1 Gew.-% Methylacrylat.

Herstellung der den Beispielen 1, 2 und 4 zugrunde liegenden schlagzähen PMMA-Formmassen

Die Herstellung der den Beispielen 1, 2 und 4 zugrunde liegenden schlagzähen PMMA-Formmassen erfolgt in zwei Schritten. Im ersten Schritt erfolgt die Herstellung einer schlagzähen Formmassenzwischenstufe mittels einer kombinierten Koagulier/Compoundieranlage. Im zweiten Schritt wird diese Formmassenzwischenstufe in einem Doppelschneckenkompounder mit dem "Matrixpolymer 2" zum endgültigen Folienrohstoff abgemischt, das Mischungsverhältnis Formmassenzwischenstufe zu dem Matrixpolymeren 2 beträgt 1 : 1, bei der Compoundierung wird 0,3 Gew.-% Tinuvin P (UV-Absorber Basis Benztriazol, Hersteller: Ciba-Geigy) zugegeben.

Schritt 1 erfolgt in einer aus zwei hintereinander geschalteten Extrudern bestehenden Anlage, wobei im ersten Extruder die Latex-Dispersion entwässert wird und mit einer Teilmenge des "Matrixpolymeren 1", das als Schmelze zugeführt wird, vereinigt wird. Im zweiten Extruder, der als Compoundier- und Entgasungsextruder fungiert, erfolgt die Zugabe der Hauptmenge des Matrixpolymeren 1 über eine Seitenbeschickung. Am Ende der Entgasungszonen erfolgt die Zugabe von Bläuungsmitteln und eines Vergilbungsstabilisators über Masterbatch. Es werden, bezogen auf die hergestellte Formmassenzwischenstufe, 4 ppm Ultramarinblau 31, 14 ppm Ultramarinviolett 11 sowie. Als Vergilbungsstabilisator, 40 ppm Natriumhypophosphit zugesetzt. Das Gewichtsverhältnis Dispersion zu Matrixpolymeren beträgt 82 zu 63 Teile.

### Herstellung der dem Beispiel 3 zugrunde liegenden schlagzähen PMMA-Formmassen

Herstellung der dem Beispiel 3 zugrunde liegenden schlagzähen PMMA-Formmassen erfolgt mittels einer aus zwei hintereinander geschalteten Extrudern bestehenden kombinierten Koagutier/Compoundieranalge. Im ersten Schritt wird die Latex-Dispersion entwässert und mit einer Teilmenge des "Matrixpolymeren 2", welches als Schmelze zugeführt wird, vereinigt. Im zweiten Extruder, der als Compoundier- und Entgasungsextruder fungiert, erfolgt die Zugabe der Restmenge des Matrixpolymeren 2 über eine Seitenbeschickung. Am Ende der Entgasungszone erfolgt die Zugabe von Bläuungsmittel, Vergilbungsstabilisator und UV-Absorber über Masterbatch. Es werden, bezogen auf die hergestellte Formmasse. 4 ppm Ultramarinblau 31, 14 ppm Ultramarinviolett 11, 40 ppm Natriumhypophosphit, sowie 0,5 Gew.-% Mark LA 31 (UV-Absorber auf der Basis Benztriazol, Hersteller Asahi-Denka) zugesetzt. Das Gewichtsverhältnis Dispersion zu Matrixpolymeren beträgt 42/81 Teile.

### Herstellung der Folien der Beispiele 1 und 3 (erfindungsgemäß)

Die Schmelze wird mittels eine ⌀ 120 mm - Einschneckenextruders erzeugt und über eine für Folienextrusion ausgelegte Flexlippendüse (1500 mm Breite) dem erfindungsgemäßen Glättwerk zugeführt. Die Düsenlippenspaltvoreinstellung beträgt 0,8 mm.
Das Glättwerk ist erfindungsgemäß durch besondere Konstruktion für die Erzeugung hoher Zuhaltekräfte im Walzenspalt ausgelegt (siehe Figur 2).

Von den glättspaltbildenden Walzen ist eine im Kalandergestell unverrückbar fixiert. Die verfahrbare Walze wird durch 2 parallel angeordnete elektrische Antriebe mit Schneckengetriebe, verbunden mit Schubstangen, an den Lagersteinen der Walzen positioniert. Auf diese Weise wird mittels der erzeugten Zuhaltekraft von 1.500 N/cm das Öffnen des Walzenspaltes bei der Herstellung der 0,125 mm dicken Folie durch den von der abkühlenden Schmelze verursachten Druck verhindert. Die Schmelze wird im Walzenspalt dimensioniert und durch die Oberfläche der spiegelhochglanzpolierten, unterhalb der Glastemperatur des PMMA-Matrixpolymeren temperierten Walzen (Rauhtiefe RA = 0,004) geglättet und abgekühlt. Dabei ist eine der beiden Walzen bombiert. Die Bombage beträgt 0,1 mm.

Als Ergebnis wird eine beidseitig hochglänzende, gelkörperfreie Folie erhalten mit sehr niedriger Oberflächentrübung. Die Folien werden im gewünschten Design bedruckt, und anschließend per "In-Mould-Film-Decoration" zum gewünschten, dekorierten Formteil verarbeitet.

Herstellung der Folie des Beispiels 2. (Vergleichsbeispiel, Chill-Roll-Verfahren analog dem zitierten Mitsubishi-Patent Nr. EP 763 560)

Die Schmelze wird mittels eines ⌀-120 mm Einschneckenextruders erzeugt und über eine für Folienextrusion ausgelegte Flexlippendüse mit 1500 mm-Breite einer Chill-Roll-Folienformwerk zugeführt. Die Düsenlippenspaltvoreinstellung beträgt 0,8 mm.

Der Schmelzfilm wird an die Oberfläche der gekühlten Chill-Roll-Walze angelegt und abgekühlt. Als Ergebnis wird eine, im Vergleich zu erfindungsgemäß hergestellten Folien, Folie mit relativ niedrigem Oberflächenglanz, hoher Gelkörperanzahl, niedrigerer Brillianz und signifikanter Oberflächentrübung erhalten (siehe Tabelle 1).

Herstellung der Folie des Beispiels 4 (Vergleichsbeispiel, Glättwerk mit Kniehebelzuhaltung, siehe Figur Nr. 1)

Die Schmelze wird mittels eines ⌀-120 mm Einschneckenextruders erzeugt und über eine für Folienextrusion ausgelegte Flexlippendüse mit 1500 mm Breite einem mit Kniehebelzuhaltung versehenen Glättwerk zugeführt. Die Düsenlippenspaltvoreinstellung beträgt 0,8 mm.

Als Ergebnis wird ein bezüglich Oberflächeneigenschaften den Folien der Beispiele 1 und 3 entsprechendes Produkt erhalten. Jedoch wird die angestrebte Foliendicke von ≤ 300 µm mit dem Kniehebelzuhaltesystem nicht erreicht. Dieses Zuhaltesystem weist im zugefahrenen Zustand aufgrund des notwendigerweise nicht völlig durchgestreckten Gelenks (ein komplett durchgestrecktes Gelenk unter Last erfordert ein unendlich hohe öffnungskraft), nicht die zur Bewirkung der notwendigen extrem hohen Zuhaltekraft notwendige Starrheit auf. Dies ist bei den hohen Gegenkräften (ausgeübt vom dünnen Schmelzfilm bei der Folienherstellung) von entscheidender Bedeutung.

### Beispiel 5

Lamination der in Beispiel 1 und 3 erfindungsgemäß. hergestellten PMMA-Folien mit einem thermoplastischen Trägermaterial

Ein ABS-Schmelzefilm wird mittels eines ⌀ 90 mm - Einschneckenextruders erzeugt und über eine Breitschlitzdüse einem Glättwerk zugeführt. Die Düsenlippenspaltvoreinstellung beträgt 1,2 mm.

Am Glättspalt wird die erfindungsgemäße PMMA-Folie, bedruckt beispielsweise mit einem sogenannten "Carbon-Design" und einem Adhäsion auf ABS bewirkenden Decklack, mit dem 240 °C heißen ABS-Schmelzefilm laminiert, Die erfindungsgemäße PMMA-Folie ist auf einer abbremsbaren Wickelwelle aufgehängt. Zur Gewährleistung einer faltenfreien Einlaufs bzw. einem sachgerechten Lamination wird die erfindungsgemäße Plexiglasfolie über eine sogenannte "Breitstreckwalze" geführt.
Das resultierende Folienlaminat hat eine Gesamtdicke von 0,50 mm, 125 µm hiervon werden von der PMMA-Schicht gebildet.
Die Abzugsgeschwindigkeit aus dem Glättwerk beträgt 5 m/min.
Die Verbundfolie dient zur Oberflächendekoration spritzgegossener Formteile über den sogenannten "Insert-Moulding"-Process. Die resultierenden Spritzgußteile besitzen ein attraktives Oberftächendesign aufgrund des verwendeten Dekordruckes. Die PMMA-Folie stellt aufgrund ihrer hochwertigen Oberflächeneigenschaften das ideale Substrat hochwertiger Lacksysteme dar.

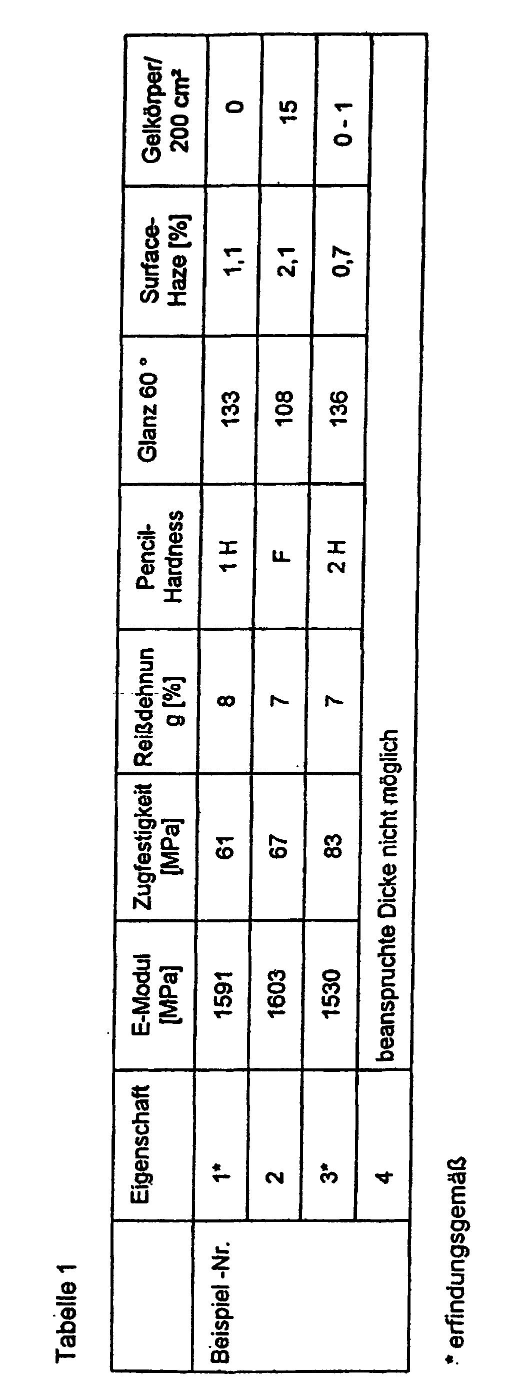

### Bezugszeichenliste

### Figur 1

- 100: Flexlippendüse
- 110: feste Walze
- 120: bewegliche Walze
- 130: Kniehebel
- 140: Pneumatikzylinder
- 150: Folie

### Figur 2

- 200: Flexlippendüse
- 210: feste Walze
- 220: bewegliche Walze
- 230: Schubstange
- 240: Schneckengetriebe
- 250: Druckmeßdose
- 260: Folie

### Figur 3

- 310: Walze des Glättwerks
- 320: Walze des Glättwerks
- 330: Walze des Glättwerks
- 340: PMMA-Folie
- 350: Breitstreckwalze
- 360: Folie

## Patentansprüche

1. Verfahren zur Herstellung von beidseitig glänzenden Folien aus thermoplastischen Kunststoffen im Dickenbereich von 80 bis 300 µm mittels eines Glättwalzenprozeß,
**dadurch gekennzeichnet,**
**daß** das Glättwerk für hohe Zuhaltekräfte im Walzenspalt ausgelegt ist, wobei die Zuhaltekräfte bis zu 1 500 N/cm betragen können.

2. Verfahren zur Herstellung von beidseitig glänzenden Folien aus thermoplastischen Kunststoffen im Dickenbereich von 80 bis 300 µm mittels eines Glättwalzenprozeß nach Anspruch 1,
**dadurch gekennzeichnet,**
**daß** der Temperaturbereich der Kunststoffe zum optimalen Warmformen mindestens 15 K beträgt.

3. Verfahren zur Herstellung von beidseitig glänzenden Folien aus thermoplastischen Kunststoffen im Dickenbereich von 80 bis 300 µm mittels eines Glättwalzenprozeß nach Anspruch 1,
**dadurch gekennzeichnet,**
**daß** die Temperatur-Differenz zwischen Einfriertemperatur und dem optimalen Warmformtemperaturbereich max. 50 K beträgt.

4. Verfahren zur Herstellung von beidseitig glänzenden Folien aus thermoplastischen Kunststoffen im Dickenbereich von 80 bis 300 µm mittels eines Glättwalzenprozeß nach Anspruch 1
**dadurch gekennzeichnet,**
**daß** es sich bei den thermoplastischen Kunststoffen um Polymethylmethacrylat oder Polyoarbonat handelt.

5. Verfahren zur Herstellung gemäß Anspruch 1, **dadurch gekennzeichnet, daß** die Walze (110) bombiert ist.

6. Verwendung der Folie, hergestellt nach dem Verfahren zur Herstellung der Ansprüche 1 - 5, als Dekorfolie für spritzgegossene Formteile.

7. Gegenstand aus spritzgegossenen thermoplastischen Formmassen,
**dadurch gekennzeichnet,**
**daß** er mit einer Folie dekoriert ist, die nach einem Verfahren zur Herstellung der Ansprüche 1 - 5 hergestellt ist.

8. Gegenstand nach Anspruch 7,
**dadurch gekennzeichnet**,
diß die thermoplastische Formmasse eine transparente Formmasse ist.

9. Gegenstand nach den Ansprüchen 7 - 8,
**dadurch gekennzeichnet,**
**daß** die nach den Ansprüchen 1 - 5 gefertigte Folie vor der Verwendung als Dekorfolie für spritzgegossene Formteile mit einem thermoplastischen Trägermaterial laminiert wird.

10. Verwendung der Folie, hergestellt nach dem Verfahren zur Herstellung der Ansprüche 1 - 5, als Dekorfolie für extrudierte Formteile.

11. Verwendung der Folie, hergestellt nach dem Verfahren zur Herstellung der Ansprüche 1 - 5, als Dekorfolie für extrudierte umgeformte Formteile.

## Claims

1. Process for producing films of thermoplastic plastics which are glossy on both sides with a thickness in the range from 80 to 300 *µ*m by means of a process' using smoothing rollers, **characterised in that** the smoothing roller mechanism is designed for high locking forces in the roller gap, the locking forces being up to 1500 N/cm.

2. Process for producing films of thermoplastic plastics which are glossy on both sides with a thickness in the range from 80 to 300 *µ*m by means of a process using smoothing rollers according to claim 1, **characterised in that** the temperature range of the plastics for optimum thermoforming is at least 15K.

3. Process for producing films of thermoplastic plastics which are glossy on both sides with a thickness in the range from 80 to 300 *µ*m by means of a process using smoothing rollers according to claim 1, **characterised in that** the temperature difference between the freezing temperature and the optimum thermoforming temperature range is not more than 50K.

4. Process for producing films of thermoplastic plastics which are glossy on both sides with a thickness in the range from 80 to 300 *µ*m by means of a process using smoothing rollers according to claim 1, **characterised in that** the thermoplastic plastics are polymethyl methacrylate or polycarbonate.

5. Process for production according to claim 1, **characterised in that** the roller (110) is convex.

6. Use of the film produced by the production process according to claims 1 - 5 as a decorative film for injection-moulded parts.

7. Object made from injection-moulded thermoplastic moulding compositions, **characterised in that** it is decorated with a film produced by a preparation process according to claims 1-5.

8. Object according to claim 7, **characterised in that** the thermoplastic moulding composition is a transparent moulding composition.

9. Object according to claims 7-8, **characterised in that** the film produced according to claims 1-5 is laminated with a thermoplastic carrier material before being used as a decorative film for injection-moulded parts.

10. Use of the film produced by the preparation process in claims 1-5 as a decorative film for extruded mouldings.

11. Use of the film produced by the preparation process in claims 1-5 as a decorative film for extruded reshaped mouldings.

## Revendications

1. Procédé pour produire des films en matières synthétiques thermoplastiques, brillants sur les deux faces, d'une épaisseur comprise entre 80 et 300 µm, au moyen d'un procédé de laminage à polissage,
**caractérisé en ce que**
la lisseuse est conçue pour supporter des forces de verrouillage élevées dans l'espace séparant les cylindres, les forces de verrouillage pouvant atteindre 1500 N/cm.

2. Procédé pour produire des films en matières synthétiques thermoplastiques, brillants sur les deux faces, d'une épaisseur comprise entre 80 et 300 µm, au moyen d'un procédé de laminage à polissage selon la revendication 1,
**caractérisé en ce que**
la température des matières synthétiques nécessaire à l'obtention d'un formage à chaud optimal est d'au moins 15 K.

3. Procédé pour produire des films en matières synthétiques thermoplastiques, brillants sur les deux faces, d'une épaisseur comprise entre 80 et 300 µm, au moyen d'un procédé de laminage à polissage selon la revendication 1,
**caractérisé en ce que**
la différence de température entre la température de solidification et la température de formage à chaud optimal est au maximum de 50 K.

4. Procédé pour produire des films en matières synthétiques thermoplastiques, brillants sur les deux faces, d'une épaisseur comprise entre 80 et 300 µm, au moyen d'un procédé de laminage à polissage selon la revendication 1,
**caractérisé en ce que**
les matières synthétiques sont du polyméthacrylate de méthyle ou du polycarbonate.

5. Procédé pour produire selon la revendication 1,
**caractérisé en ce que**
le rouleau (110) est bombé.

6. Utilisation du film, produit selon le procédé pour produire selon l'une quelconque des revendications 1 à 5, sous forme d'un film décoratif pour pièces moulées par injection.

7. Objet en matière thermoplastique moulable par injection,
**caractérisé en ce qu'**
il est décoré à l'aide d'un film produit selon le procédé pour produire décrit dans l'une quelconque des revendications 1 à 5.

8. Objet selon la revendication 7,
**caractérisé en ce que**
la matière moulable thermoplastique est une matière moulable transparente.

9. Objet selon l'une des revendications 7 ou 8,
**caractérisé en ce que**
le film produit selon l'une quelconque des revendications 1 à 5 est laminé avec un support thermoplastique avant de servir de film décoratif pour les pièces moulées par injection.

10. Utilisation du film, produit selon le procédé pour produire selon l'une quelconque des revendications 1 à 5, sous forme d'un film décoratif pour pièces moulées extrudées.

11. Utilisation du film, produit selon le procédé pour produire selon l'une quelconque des revendications 1 à 5, sous forme d'un film décoratif pour pièces moulées refaçonnées extrudées.
